# FASCICULE DE BREVET EUROPEEN

(11) **EP 3 708 005 B1**
(45) Date de publication et mention de la délivrance du brevet: **19.01.2022**
(21) Numéro de dépôt: 20161009.4
(22) Date de dépôt: 04.03.2020
(51) Int. Cl.: A21C 15/02, A21C 3/00, A21C 3/08

(54) **APPAREIL, PROCEDE DE FABRICATION DE PÂTISSERIE SOUS LA FORME DE CÔNE, ET LADITE PÂTISSERIE**
GERÄT UND HERSTELLUNGSVERFAHREN EINES KONDITOREIPRODUKTS IN FORM EINES KONUS, UND ENTSPRECHENDES KONDITOREIPRODUKT
APPARATUS, METHOD FOR MANUFACTURING PASTRY IN A CONE SHAPE, AND SAID PASTRY

(30) Priorité: 13.03.2019 CH 3052019
(43) Date de publication de la demande: 16.09.2020
(73) Titulaire: Samvaz S.A., 1618 Châtel-St-Denis (CH)
(72) Inventeur: DERIVAZ, François, 1618 Châtel-St-Denis (CH)
(74) Mandataire: Micheli & Cie SA

(56) Documents cités:
- FR-A3- 2 976 922
- TW-U- M 543 563
- US-A- 1 190 134
- US-A1- 2015 201 625

## Description

La présente invention concerne un appareil de fabrication de pâtisserie sous la forme de cône. La présente invention concerne également un équipement, un procédé de fabrication de pâtisserie sous la forme de cône par mise en oeuvre dudit appareil, ainsi que ladite pâtisserie obtenue selon ledit procédé et réalisée en meringue.

Une pâtisserie sous la forme de cône est une préparation de pâte salée ou sucrée cuite au four, généralement utilisée comme support comestible pour réaliser des glaces ou différents plats dans lesquels le cône de pâte cuite est fourré de préparations salées ou sucrées.

Les cônes peuvent être réalisés en pâte feuilletée ou en pâte brisée par exemple. La pâte feuilletée ou brisée est abaissée, découpée sous la forme d'une fine bande puis enroulée autour d'un moule conique métallique, généralement en inox. La pâte enroulée autour du moule est cuite au four puis le cône de pâte cuite est démoulé. Ce procédé n'est utilisable que pour réaliser des cônes à partir d'une pâte pouvant être abaissée et découpée pour former de fines bandes.

La demande de brevet américaine US2015/201625 décrit une installation pour fabriquer un cône à base de pain. Cette installation n'est également utilisable que pour réaliser des cônes à partir d'une pâte préalablement mise en forme de bande allongée.

Le document taïwanais TW M543563 décrit une pâtisserie sous forme de cône comprenant plusieurs bandes de couleurs différentes. Elle est typiquement réalisée à l'aide d'une pâte pouvant être abaissée et découpée, ladite pâte étant, dans un premier temps, étalée en forme de rectangle et recouverte de bandes de pâte de couleurs différentes, le tout étant ensuite enroulé pour obtenir la forme désirée avant sa cuisson. Un tel procédé de fabrication n'est réalisable qu'à partir d'une préparation pouvant être abaissée et découpée.

Les cônes peuvent également être réalisés à partir d'une fine gaufrette préalablement cuite sous la forme d'un disque, puis enroulée immédiatement après cuisson autour d'un moule de forme conique permettant à la gaufrette de prendre la forme d'un cône avant de refroidir. Ce procédé n'est utilisable que pour réaliser des cônes à partir de disques de gaufrette. En outre, il nécessite une certaine dextérité pour pouvoir former rapidement et correctement les cornets.

La demande de brevet française FR 2 976 922 décrit une pâtisserie sous la forme d'un cône, faite d'un aliment mousseux solidifié tel que la meringue. Cependant, cette demande ne décrit aucun procédé pour fabriquer une telle pâtisserie.

Aucun des procédés actuels connus ne permet de former de pâtisserie sous la forme d'un cône à partir d'une préparation destinée à composer la pâtisserie, qui, lorsqu'elle est non cuite, présente certaines propriétés rhéologiques permettant notamment son extrusion, et qui, une fois cuite, présente une certaine rigidité empêchant toute mise en forme ultérieure. Ainsi par exemple, lorsque la pâtisserie est un cône en meringue, la préparation destinée à composer la meringue non cuite ou cuite présente des propriétés rhéologiques non compatibles avec les procédés existants.

La présente invention vise à remédier à ces inconvénients en proposant un procédé de fabrication de pâtisserie sous la forme de cône ainsi qu'un équipement et un appareil pour la mise en oeuvre de ce procédé, permettant de réaliser de manière simple un cône à partir d'une préparation différente d'une pâte à abaisser ou d'une gaufrette.

Plus particulièrement, la présente invention vise à proposer un appareil de fabrication de pâtisserie sous la forme de cône ainsi qu'un équipement et un procédé de fabrication permettant la mise en oeuvre de cet appareil, permettant de réaliser de manière simple un cône à partir d'une préparation de type meringue ou autre préparation présentant des propriétés rhéologiques similaires.

A cet effet, la présente invention concerne un appareil de fabrication de pâtisserie sous la forme de cône selon la revendication 1.

Selon un premier mode de réalisation de l'invention, le plateau est rotatif, et les moyens de guidage de l'outil de dépôt sont agencés pour aider ledit outil de dépôt à se déplacer le long du moule conique monté sur le support de cône lorsque ledit support de cône est entrainé en rotation par le plateau rotatif, la vitesse de déplacement de l'outil de dépôt et la vitesse de rotation du support de cône étant choisies de sorte que l'outil de dépôt est destiné à se déplacer le long d'une même génératrice du moule conique, afin de pouvoir déposer autour dudit moule conique des spires continues et contiguës de la préparation destinée à composer la pâtisserie, de manière à obtenir au moins un cône constitué de spires continues et contiguës de ladite préparation formé autour du moule conique.

Selon un autre mode de réalisation de l'invention, le plateau est rotatif, et les moyens de guidage de l'outil de dépôt sont agencés pour aider ledit outil de dépôt à se déplacer le long du moule conique monté sur le support de cône lorsque ledit support de cône est entrainé en rotation par le plateau rotatif, la vitesse de déplacement de l'outil de dépôt et la vitesse de rotation du support de cône étant choisies de sorte que l'outil de dépôt est destiné à se déplacer le long de différentes génératrices du moule conique en suivant la directrice, afin de pouvoir déposer sur ledit moule conique des lignes contiguës et suivant les génératrices de la préparation destinée à composer la pâtisserie, de manière à obtenir au moins un cône constitué de lignes génératrices contiguës de ladite préparation formé autour du moule conique.

La présente invention concerne également un équipement de fabrication de pâtisserie sous la forme de cône à partir d'une préparation destinée à composer la pâtisserie comprenant un appareil tel que défini ci-dessus, et un outil de dépôt de ladite préparation destinée à composer la pâtisserie comprenant un réservoir de ladite préparation, ledit outil de dépôt étant agencé pour coopérer avec les moyens de guidage de l'appareil et le support de cône de sorte que ledit outil de dépôt et le moule conique monté sur le support de cône se déplacent l'un par rapport à l'autre afin de pouvoir déposer sur ledit moule conique, de préférence en continu, de la préparation destinée à composer la pâtisserie pour obtenir au moins un cône de ladite préparation formé autour du moule conique.

La présente invention concerne également un procédé de fabrication de pâtisserie sous la forme de cône à partir d'une préparation destinée à composer la pâtisserie par mise en oeuvre de l'appareil et de l'équipement tels que définis ci-dessus, ledit procédé comprenant les étapes de :
a) mise en place du support de cône sur le plateau
b) positionnement des moyens de guidage de l'outil de dépôt de la préparation destinée à composer la pâtisserie de manière à pouvoir positionner ledit outil de dépôt parallèlement à une génératrice du moule conique
c) mise en place du moule conique sur le support de cône
d) déposition de la préparation destinée à composer la pâtisserie autour du moule conique par déplacement l'un par rapport à l'autre dudit moule conique monté sur le support de cône et de l'outil de dépôt guidé par les moyens de guidage afin de déposer sur ledit moule conique, de préférence en continu, de la préparation destinée à composer la pâtisserie pour obtenir au moins un cône de ladite préparation formé autour du moule conique
e) retrait du support de cône, portant le moule conique recouvert de la préparation destinée à composer la pâtisserie, du plateau
f) mise en place du support de cône portant le moule conique recouvert de la préparation destinée à composer la pâtisserie dans un four de cuisson
g) cuisson du cône de préparation destinée à composer la pâtisserie
h) retrait du support de cône portant le moule conique recouvert de la préparation destinée à composer la pâtisserie cuite du four de cuisson,
i) séparation du moule conique recouvert de la préparation destinée à composer la pâtisserie cuite du support de cône
j) démoulage de la préparation destinée à composer la pâtisserie cuite du moule conique pour obtenir une pâtisserie sous la forme d'un cône.

Selon une première variante du procédé de l'invention, le plateau rotatif, et la déposition de la préparation destinée à composer la pâtisserie autour du moule conique est réalisée par rotation dudit moule conique monté sur le support de cône entrainé par le plateau rotatif et déplacement en translation de l'outil de dépôt guidé par les moyens de guidage le long du moule conique, la vitesse de déplacement de l'outil de dépôt et la vitesse de rotation du support de cône étant choisies de sorte que l'outil de dépôt se déplace le long d'une même génératrice du moule conique afin de déposer autour dudit moule conique des spires continues et contiguës de la préparation destinée à composer la pâtisserie pour obtenir au moins un cône constitué de spires continues et contiguës de ladite préparation formé autour du moule conique.

Selon une autre variante du procédé de l'invention, le plateau est rotatif, et la déposition de la préparation destinée à composer la pâtisserie autour du moule conique est réalisée par rotation dudit moule conique monté sur le support de cône entrainé par le plateau rotatif et plusieurs déplacements en translation de l'outil de dépôt guidé par les moyens de guidage le long du moule conique, la vitesse de déplacement de l'outil de dépôt et la vitesse de rotation du support de cône étant choisies de sorte que l'outil de dépôt se déplace le long de différentes génératrices du moule conique en suivant la directrice, afin de déposer sur ledit moule conique des lignes contiguës et suivant les génératrices de la préparation destinée à composer la pâtisserie pour obtenir au moins un cône constitué de lignes génératrices contiguës de ladite préparation formé autour du moule conique.

L'appareil, l'équipement et le procédé selon l'invention permettent d'utiliser des préparations de type préparations pour meringue pour réaliser de manière simple et facile, des cônes creux composés de ladite préparation cuite.

La présente invention concerne également une pâtisserie sous la forme d'un cône, obtenue par mise en œuvre du procédé décrit ci-dessus et réalisée en meringue. De préférence, le cône est constitué de spires continues et contiguës ou de lignes génératrices contiguës de meringue.

La pâtisserie sous la forme d'un cône en meringue est de préférence à directrice circulaire ou polygonale.

D'autres caractéristiques et avantages de la présente invention apparaîtront à la lecture de la description détaillée suivante d'un mode de réalisation préféré de l'invention, donné à titre d'exemple non limitatif, et faite en référence aux dessins annexés dans lesquels :
- la figure 1 est une vue en perspective d'un appareil selon l'invention ;
- la figure 2 est une vue en perspective d'un support de cône utilisé dans l'invention ;
- la figure 3 représente une vue en perspective du moule conique ;
- les figures 4 à 8 représentent différentes étapes d'un procédé de l'invention;
- la figure 9 représente une vue en perspective d'un cône sur son support de cône ;
- la figure 10 représente une vue de l'intérieur d'un cône fabriqué selon l'invention
- la figure 11 représente un deuxième mode de réalisation des moyens de guidage de l'outil de dépôt de la préparation destinée à composer la pâtisserie,
- la figure 12 est une vue en perspective arrière du chariot de guidage utilisé dans la présente invention ;
- la figure 13 est une vue en perspective latérale du chariot de guidage utilisé dans la présente invention ; et
- les figures 14 et 15 représentent des vues en perspective de l'appareil selon l'invention équipé des moyens de guidage selon le deuxième mode de réalisation, en position initiale et en position finale respectivement.

Dans la présente description, on appelle « pâtisserie » une préparation de pâte salée ou sucrée cuite au four. La pâte utilisée dans la présente invention présente des propriétés rhéologiques permettant son extrusion au moyen de l'outil de dépôt de ladite préparation et son maintien sur le moule conique avant cuisson sous la forme d'un cône, comme cela sera décrit ci-après. Une telle pâte est de préférence une préparation pour meringue, selon une recette traditionnelle, connue de l'homme de métier. Elle peut être également tout autre type de préparation de pâte salée ou sucrée, présentant une consistance appropriée permettant la mise en œuvre du procédé de l'invention.

Dans la présente invention, on appelle « cône » un solide creux délimité par une surface conique engendrée par une droite (génératrice) passant par un point fixe (sommet ou apex) et un point variable décrivant une courbe fermée (directrice). Cette définition inclut le cylindre, un cylindre étant considéré comme un cône dont le sommet se trouve à l'infini, les génératrices étant alors parallèles.

La courbe directrice est de préférence un cercle ou un polygone. De préférence le cône est droit.

Dans la présente invention, le cône présente une certaine hauteur pour offrir à l'intérieur du cône un espace de remplissage d'une certaine profondeur, du type cornet de glace. De préférence, la hauteur du cône est supérieure aux dimensions de sa base.

Dans le cadre d'un cylindre, il est possible de prévoir un ou deux fonds réalisés à partir de la préparation destinée à composer la pâtisserie pour fermer une, extrémité, voire les deux extrémités, du cylindre.

Conformément à l'invention, l'appareil de fabrication de pâtisserie sous la forme de cône comprend un socle portant au moins un plateau, au moins un support de cône agencé pour pouvoir être monté de manière amovible sur ledit plateau, au moins un moule de forme conique agencé pour pouvoir être monté de manière amovible sur le support de cône, et des moyens de guidage aptes à guider un outil de dépôt d'une préparation destinée à composer la pâtisserie, lesdits moyens de guidage et le support de cône étant agencés pour que ledit outil de dépôt et le moule conique monté sur le support de cône soient aptes à se déplacer l'un par rapport à l'autre afin de pouvoir déposer sur ledit moule conique, de préférence en continu, de la préparation destinée à composer la pâtisserie, de manière à obtenir au moins un cône de ladite préparation formé autour du moule conique.

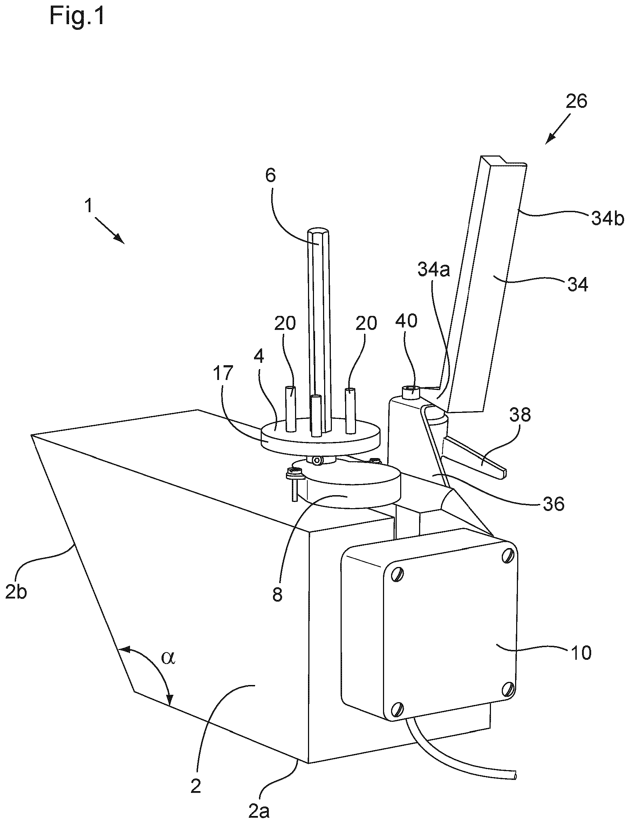

En référence aux figures 1 à 3, il est représenté un premier mode de réalisation de l'appareil selon l'invention permettant de réaliser une pâtisserie sous la forme d'un cône constitué de spires continues et contiguës et dont la directrice est un cercle.

L'appareil 1 comprend un socle 2 destiné à être positionné sur un bâti, ou un plan de travail (non représenté). Le socle 2 porte au moins un plateau rotatif 4, de préférence de forme circulaire, et monté solidaire en rotation sur un arbre 6, ledit arbre 6 étant agencé pour être entrainé en rotation par un moteur approprié 8 prévu sur le socle 2. Des moyens de connexion électrique 10 sont prévus pour alimenter le moteur 8 et faire tourner l'arbre 6. L'arbre 6 présente une certaine hauteur, appropriée pour recevoir un moule conique, comme cela sera décrit ci-après.

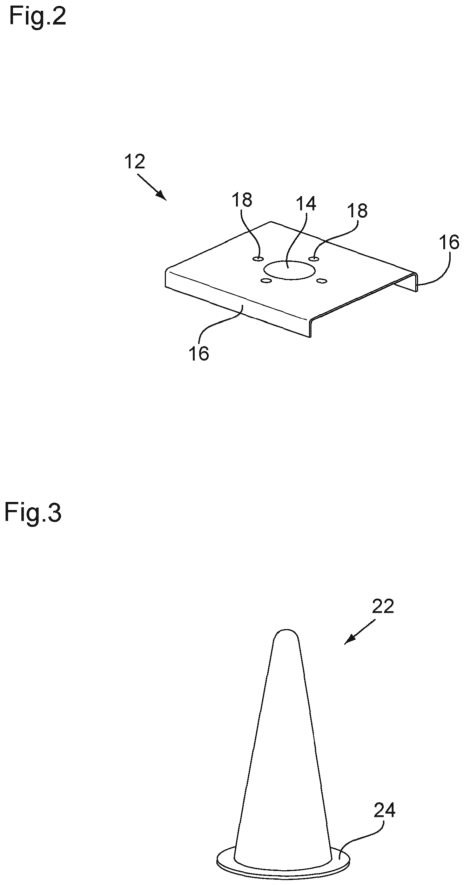

Comme le montre plus spécifiquement la figure 2, l'appareil 1 comprend également au moins un support de cône 12 constitué d'une plaque plane, de préférence métallique, présentant en son centre un orifice 14 de dimensions appropriées permettant de monter le support de cône 12 sur le plateau rotatif 4 autour de l'arbre 6 en introduisant l'arbre 6 dans l'orifice 14. Le support de cône 12 comprend également au moins deux rebords latéraux 16 dimensionnés pour venir se positionner autour du plateau rotatif 4 et de préférence pour venir s'emboiter autour du bord périphérique 17 dudit plateau rotatif 4. Le support de cône 12 comprend aussi quatre petits orifices 18 positionnés symétriquement et concentriquement autour de l'orifice 14. Chaque orifice 18 est agencé pour recevoir une goupille de positionnement 20 faisant saillie du plateau rotatif 4, les goupilles de positionnement 20 étant disposées de manière correspondante autour de l'arbre 6 (seules trois goupilles de positionnement sont représentées sur la figure 1).

Le bord périphérique 17 du plateau 4 et les goupilles de positionnement 20 constituent des moyens de fixation et de centrage du support de cône 12 prévus sur le plateau rotatif 4 et agencés pour que le support de cône 12 puisse être monté de manière amovible sur ledit plateau rotatif 4.

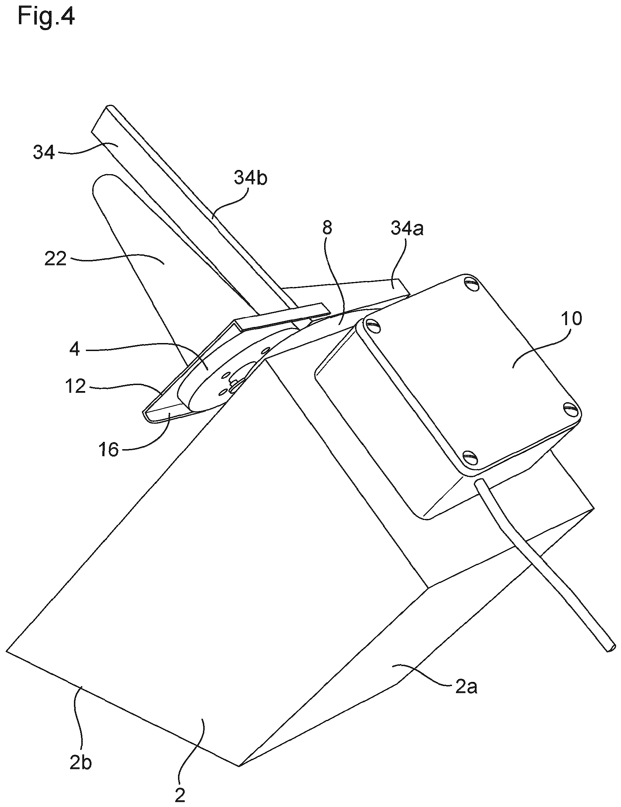

En référence à la figure 3, l'appareil 1 de l'invention comprend également un moule de forme conique 22 agencé pour pouvoir être monté de manière amovible sur le support de cône 12. Le moule conique 22 est de préférence un cône droit à base discoïdale et creux. Il présente à sa base un rebord périphérique extérieur 24 agencé pour se positionner sur le support de cône 12. Les dimensions du moule conique 22, et notamment sa hauteur ainsi que le diamètre de sa base, sont choisies de sorte que, lorsque le moule conique 22 est positionné sur le support de cône 12, l'apex du moule conique 22 s'emboite sur l'extrémité supérieure, libre, de l'arbre 6, et la base du moule conique 22 repose sur le support de cône 12 autour des quatre goupilles de positionnement 20 faisant saillie du support de cône 12 par les orifices 18, comme le montre la figure 4. Ainsi, le support de cône 12 et le moule conique 22 peuvent être montés sur le plateau rotatif 4 de manière à être solidaires en rotation dudit plateau rotatif 4 lorsque ce dernier est entrainé en rotation pour le dépôt de la préparation destinée à composer la pâtisserie sur le moule conique 22 mais également de manière à être amovibles afin de pouvoir être séparés du plateau rotatif 4 pour les autres étapes du procédé, et notamment pour l'étape de cuisson. En outre, le moule conique 22 est également monté de manière amovible sur le support de cône 12 afin de pouvoir être séparé du support de cône 12 au moment du démoulage, comme cela sera décrit après.

Le moule conique 22 est réalisé en silicone.

En référence aux figures 1 et 4 à 6, l'appareil selon l'invention comprend également des moyens de guidage 26 aptes à guider un outil de dépôt 28 prévu pour déposer la préparation destinée à composer la pâtisserie autour du moule conique 22. Lesdits moyens de guidage 26 sont agencés pour aider ledit outil de dépôt 28 à se déplacer le long du moule conique 22 monté sur le support de cône 12 lorsque ledit support de cône 12 est entrainé en rotation par le plateau rotatif 4, la vitesse de déplacement de l'outil de dépôt 28 et la vitesse de rotation du support de cône 12 étant choisies de sorte que l'outil de dépôt 28 est destiné à se déplacer le long d'une même génératrice du moule conique 22 afin de pouvoir déposer autour dudit moule conique 22 des spires 30 continues et contiguës de la préparation destinée à composer la pâtisserie, de manière à obtenir au moins un cône 32 constitué de spires 30 continues et contiguës de ladite préparation formé autour du moule conique 22.

De préférence, les moyens de guidage 26 de l'outil de dépôt 28 sont agencés pour aider à positionner ledit outil de dépôt 28 parallèlement à une génératrice du moule conique 22 au moins lors du dépôt de la préparation destinée à composer la pâtisserie autour dudit moule conique. A cet effet, les moyens de guidage 26 peuvent comprendre de manière avantageuse une barre 34 montée pivotante par rapport au socle 2. La barre 34 comprend une base 34a montée de manière pivotante, dans le plan perpendiculaire à son axe de pivotement, sur une équerre 36 solidaire du socle 2. L'angle de pivotement de la base 34a pour évoluer entre une position neutre et une position d'utilisation est réglable au moyen d'une manette 38. Une butée 40 est prévue sur l'équerre pour déterminer la position d'utilisation de la barre 34. Ladite barre 34 présente avec sa base 34a un angle permettant à la barre 34 d'être parallèle à une génératrice du moule conique 22 lorsqu'elle est en position d'utilisation, sa base 34a étant contre la butée 40.

D'une manière avantageuse, la barre 34 présente au moins un rebord de guidage 34b longitudinal apte à recevoir au moins une gorge prévue sur l'outil de dépôt 28, comme cela sera décrit ci-après.

Avantageusement, le socle 2 peut comprendre une première surface d'appui 2a agencée pour être posée sur le bâti ou le plan de travail lorsque le support de cône 12 est mis en place sur le plateau rotatif 4 et une seconde surface d'appui 2b inclinée ou biseautée par rapport à la première surface d'appui 2a et agencée pour être posée sur ledit bâti ou le plan de travail au moins lorsque la préparation destinée à composer la pâtisserie doit être déposée sur le moule conique 22. L'angle a entre les première et seconde surfaces d'appui 2a, 2b est choisi de sorte que l'arbre 6 est sensiblement vertical en position de repos ou lorsque le support de cône 12 est mis en place sur le plateau rotatif 4 et de sorte que l'arbre 6 (ou l'axe longitudinal du moule conique 22) n'est pas vertical au moins lorsque la préparation est déposée sur le moule conique 22. Ce basculement du socle 2 sur ses surfaces d'appui 2a ou 2b permet d'une part de monter aisément le support de cône 12 sur le plateau rotatif 4 et d'autre part de déposer ensuite facilement la préparation autour du moule conique 22 à l'aide de l'outil de dépôt 28.

L'invention concerne également un équipement comprenant l'appareil 1 notamment tel que décrit ci-dessus ainsi que l'outil de dépôt 28.

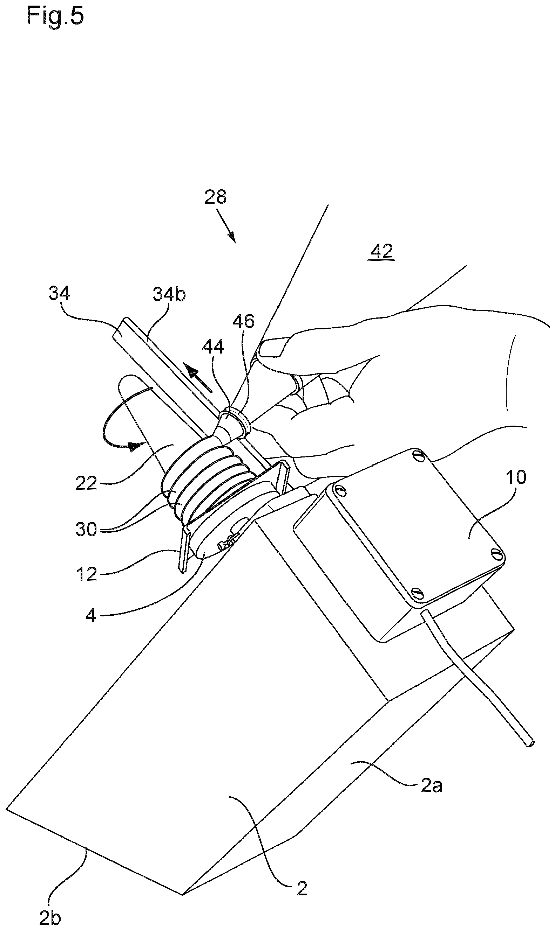

En référence à la figure 5, l'outil de dépôt 28 comprend un réservoir 42 dans lequel est placée la préparation destinée à composer la pâtisserie et un embout 44 présentant une ouverture de forme permettant de sortir un cordon de ladite préparation pour former ici les spires 30, ledit outil de dépôt 28 étant agencé pour coopérer avec les moyens de guidage 26 de l'appareil de manière à pouvoir se déplacer le long du moule conique 22 monté sur le support de cône 12 lorsque ledit support de cône 12 est entrainé en rotation par le plateau rotatif 4, afin de pouvoir déposer autour dudit moule conique 22 des spires 30 continues et contiguës de la préparation destinée à composer la pâtisserie pour obtenir au moins un cône 32 de ladite préparation formé autour du moule conique 22.

D'une manière avantageuse, l'embout 44 coopère avec les moyens de guidage 26. A cet effet, l'embout 44 présente, dans ce mode de réalisation, une gorge périphérique 46 à l'intérieur de laquelle le rebord de guidage 34b de la barre 34 peut glisser.

L'outil de dépôt 28 peut être du type poche à douille manipulée par un utilisateur ou un dispositif automate conçu pour former le cordon de préparation par extrusion.

Le procédé de fabrication de pâtisserie sous la forme de cône constitué de spires 30 continues et contiguës à partir d'une préparation destinée à composer la pâtisserie par mise en œuvre de l'appareil et de l'équipement décrits ci-dessus comprend la première étape a) consistant à la mise en place du support de cône 12 sur le plateau rotatif 4 par introduction de l'arbre 6 dans l'orifice 14 et des goupilles de positionnement 20 dans les orifices 18. Le socle 2 étant alors posé sur sa première surface d'appui 2a, l'arbre 6 est sensiblement vertical.

Puis, conformément à l'étape b), les moyens de guidage 26 de l'outil de dépôt 28 de la préparation destinée à composer la pâtisserie sont placés de manière à pouvoir positionner ledit outil de dépôt 28 parallèlement à une génératrice du moule conique 22. Pour cela, la base 34a de la barre 34 est pivotée dans sa position d'utilisation au moyen de la manette 38 pour venir contre la butée 40 de sorte que la barre 34 est parallèle à une génératrice du moule conique 22.

De préférence, le procédé comprend en outre, une étape de positionnement du socle 2 sur sa seconde surface d'appui 2b pour l'incliner et positionner le support de cône 12 de sorte que l'arbre 6 ou l'axe longitudinal du moule conique 22 ne sera pas vertical au moins lorsque la préparation destinée à composer la pâtisserie sera déposée. Cette étape doit être réalisée au plus tard avant l'étape d), et de préférence avant l'étape c).

Puis, conformément à l'étape c) le moule conique 22 est mis en place sur le support de cône 12 en disposant la base 24 du moule conique 22 autour des goupilles de positionnement 20 et l'apex du moule conique 22 au sommet de l'arbre 6, comme le montre la figure 4. L'ordre des étapes b) et c) peut être interverti.

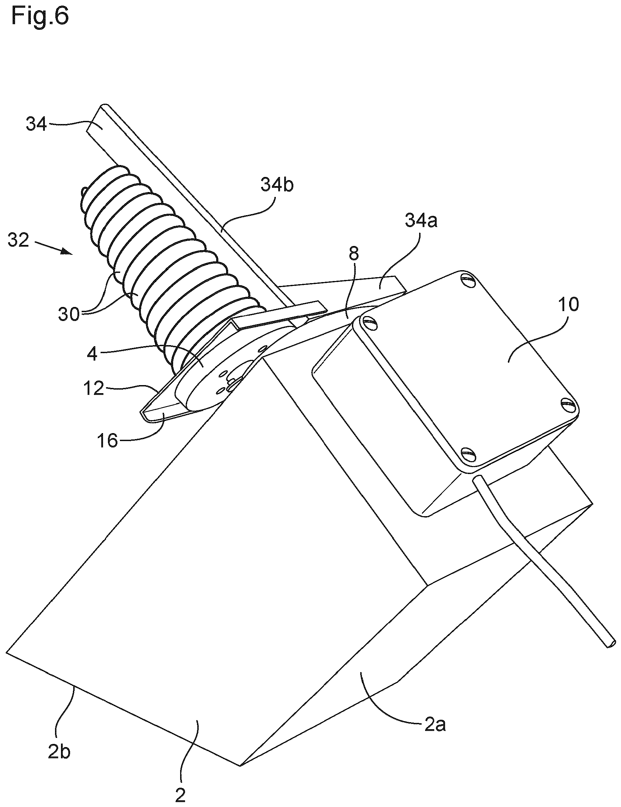

Puis, selon l'étape d), le moteur 8 est mis en route pour faire tourner l'arbre 6 dans le sens antihoraire vu de dessous et entrainer en rotation le plateau rotatif 4 portant le support de cône 12 et le moule conique 22. En parallèle, l'outil de dépôt 28 dont le réservoir 42 est rempli de préparation destinée à composer la pâtisserie est positionné sur les moyens de guidage 26 de sorte que le rebord de guidage 34b de la barre 34 peut coulisser dans la gorge périphérique 46. Comme le montre la figure 5, l'outil de dépôt 28, guidé par les moyens de guidage 26, est déplacé en translation, de manière continue et régulière, le long du moule conique 22, depuis la base dudit moule conique 22 jusqu'à son sommet, la vitesse de déplacement de l'outil de dépôt 28 et la vitesse de rotation du support de cône 12 étant choisies de sorte que l'outil de dépôt 28 se déplace le long d'une même génératrice du moule conique 22 afin de déposer autour dudit moule conique 22 un cordon de la préparation destinée à composer la pâtisserie en formant des spires 30 continues et contiguës pour obtenir au moins un cône 32 constitué de spires 30 continues et contiguës de ladite préparation formé autour du moule conique 22, comme le montre la figure 6. Puis le moteur 8 est arrêté et l'outil de dépôt 28 est écarté. Les moyens de guidage 26 sont remis dans leur position neutre en faisant pivoter la barre 26.

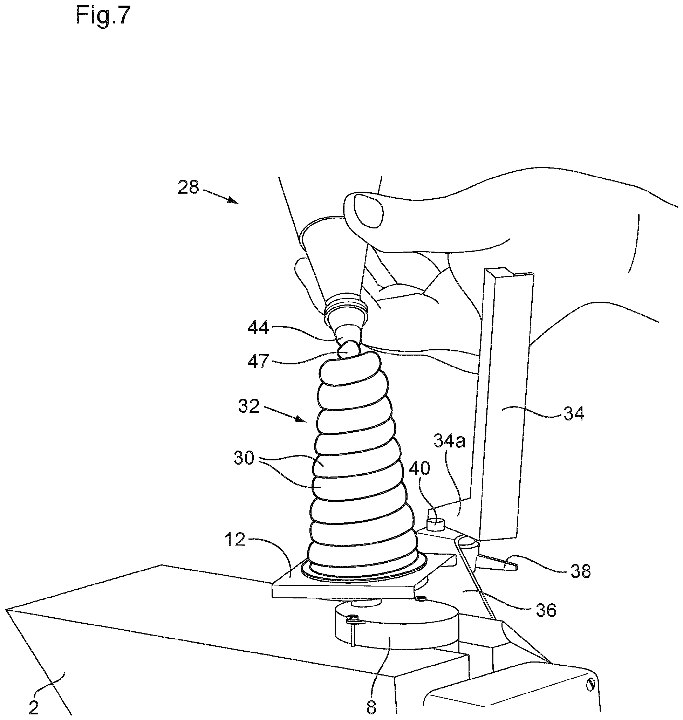

De préférence, le procédé comprend en outre, après l'étape d), une étape de repositionnement du socle 2 sur sa première surface d'appui 2a pour repositionner le moule conique 22 et le support de cône 12 de sorte que l'axe longitudinal du moule conique 22 est sensiblement vertical, comme le montre la figure 7.

Si besoin, le procédé peut comprendre ensuite une étape supplémentaire de dépôt d'une pointe 47 de préparation à l'extrémité du cône 32 de manière à fermer correctement le cône 32. Cette étape est réalisée en déplaçant l'outil de dépôt 28 en regard du sommet du cône 32, comme montré sur la figure 7.

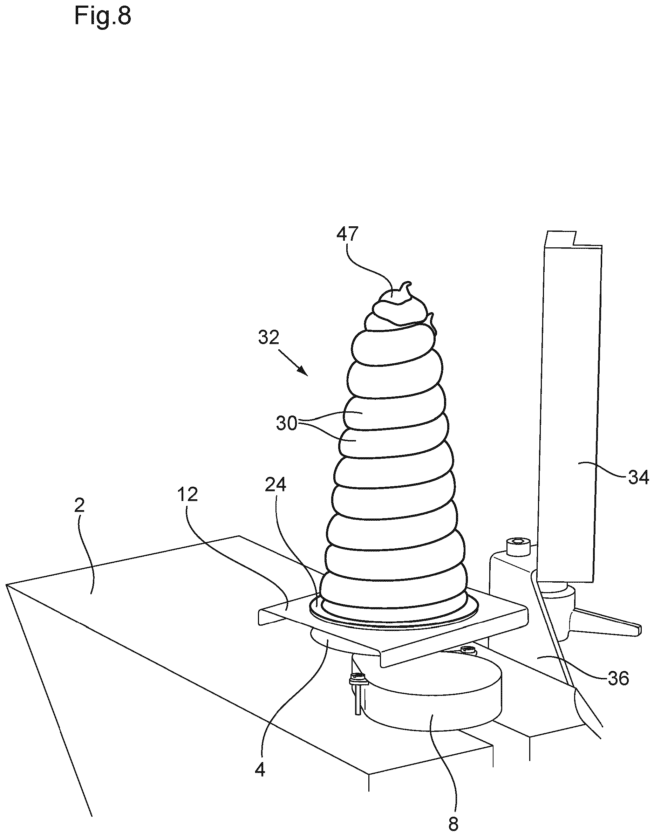

Puis, comme le montre la figure 8, le support de cône 12 portant le moule conique 22 recouvert de la préparation destinée à composer la pâtisserie est retiré du plateau rotatif 4 selon l'étape e), et est mis en place dans un four de cuisson selon l'étape f) du procédé.

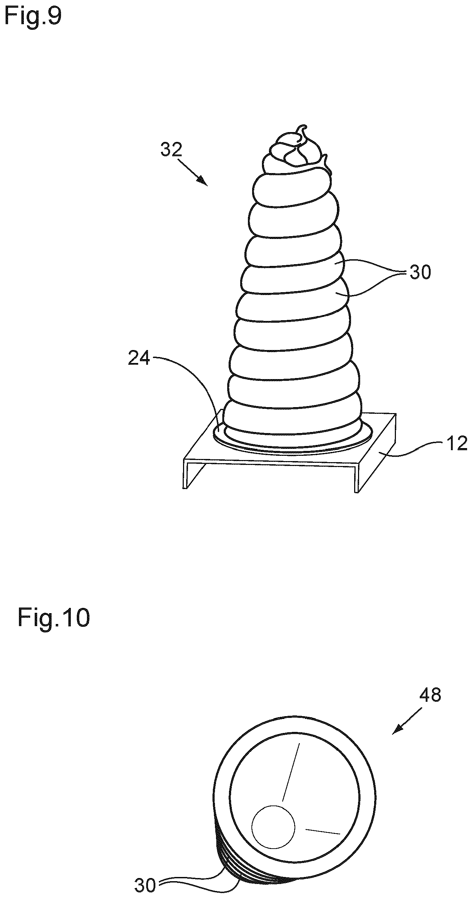

Ensuite, le cône 32 de préparation destinée à composer la pâtisserie est cuit selon l'étape g), puis le support de cône 12 portant le moule conique 22 recouvert de préparation cuite est retiré du four de cuisson conformément à l'étape h), comme représenté sur la figure 9.

Enfin, le moule conique 22 recouvert de la préparation cuite est séparé du support de cône 12 selon l'étape i) puis la préparation cuite est séparée du moule conique 22 pour obtenir une pâtisserie 48 sous la forme d'un cône creux, rigide, constitué de spires 30 continues et contiguës comme représenté sur la figure 10. Il est bien évident que l'outil de dépôt peut être agencé pour commencer le dépôt du cordon de la préparation par le sommet du cône.

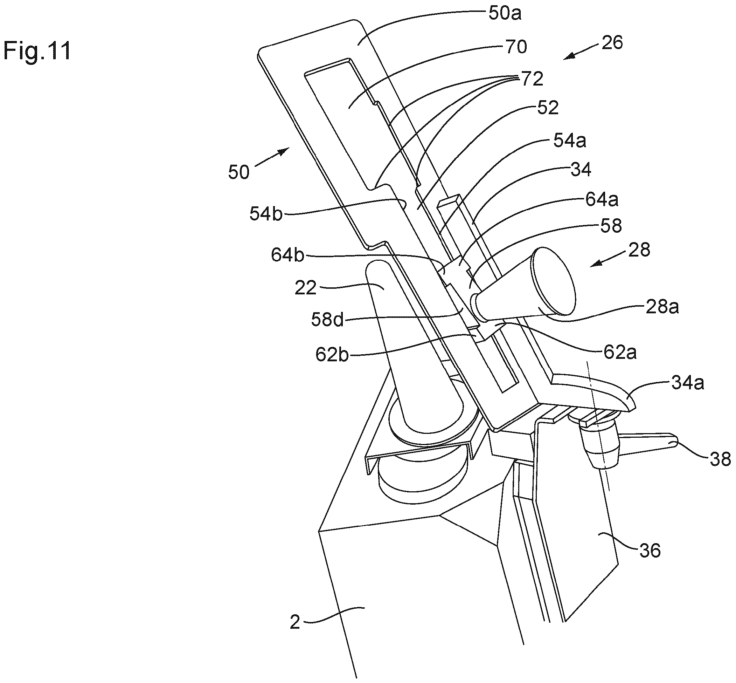

Il est décrit en référence aux figures 11 à 15 un deuxième mode de réalisation des moyens de guidage de l'outil de dépôt 28 de la préparation destinée à composer la pâtisserie pour aider à positionner ledit outil de dépôt 28 parallèlement à une génératrice du moule conique 22 au moins lors du dépôt de ladite préparation. Les éléments communs au premier mode de réalisation décrit ci-dessus sont repris avec les mêmes références. Dans ce deuxième mode de réalisation, la barre 34 est toujours montée pivotante par sa base 34a sur une équerre 36 solidaire du socle 2, sa position étant réglable par pivotement au moyen de la manette 38.

La barre 34 est ici munie d'une glissière 50 se présentant sous la forme d'une plaque allongée d'axe longitudinal parallèle à l'axe longitudinal de la barre 34 et présentant une face principale supérieure 50a, en regard de l'outil de dépôt 28, et une face principale inférieure 50b, destinée à venir en regard du moule conique 22. La glissière 50 est fixée à la barre 34 par sa face principale supérieure 50a, de sorte que ladite face 50a est perpendiculaire à la barre 34.

La glissière 50 présente une ouverture centrale longitudinale 52 délimitée par deux rebords de guidage longitudinaux 54a, 54b, en regard l'un de l'autre définissant une rainure, chacun desdits rebords de guidage 54a, 54b étant apte à recevoir une gorge latérale 56a, 56b prévue sur un chariot de guidage 58 agencé pour porter l'outil de dépôt 28 de la préparation destinée à composer la pâtisserie.

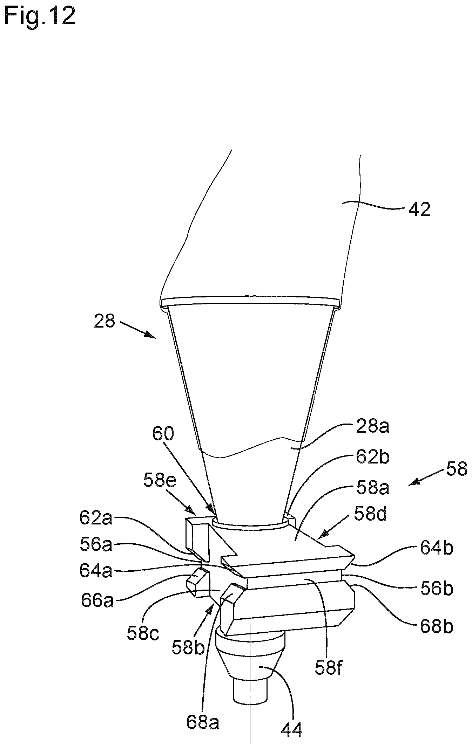

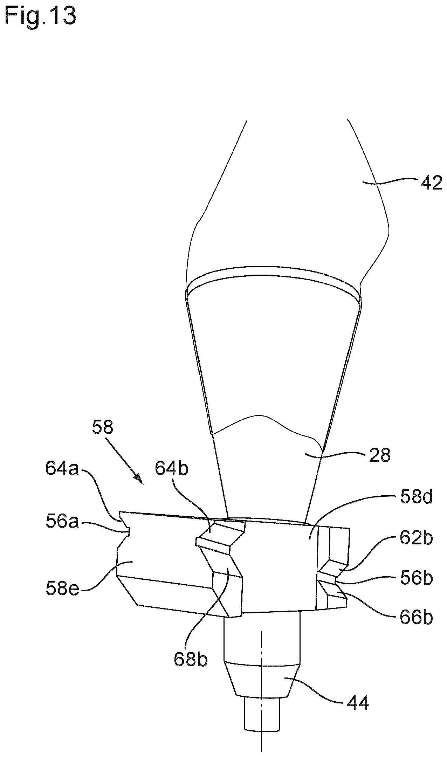

Comme le montrent plus précisément les figures 12 et 13, le chariot de guidage 58 comprend un corps de forme globale parallélépipédique, délimité par une face principale longitudinale supérieure 58a, une face principale longitudinale inférieure 58b, deux faces latérales 58c et 58d, une face avant 58e et une face arrière 58f.

Le chariot de guidage 58 présente entre ses faces principales longitudinales supérieure 58a et inférieure 58b un orifice traversant 60, l'entrée de l'orifice 60 sur la face principale supérieure 58a étant destinée à recevoir la douille 28a de l'outil de dépôt 28, et la sortie de l'orifice 60 sur la face principale inférieure 58b étant destinée à recevoir l'embout 44 présentant une ouverture de forme permettant de sortir un cordon de ladite préparation. L'entrée de l'orifice 60 peut être filetée pour pouvoir y visser la douille 28a. L'embout 44 peut être réalisé d'une seule pièce avec le chariot de guidage 58.

Le corps du chariot de guidage 58 présente sur ses deux faces latérales 58c et 58d les gorges latérales 56a et 56b respectivement dans lesquelles peuvent coulisser les rebords de guidage 54a et 54b respectivement de la glissière 50.

Avantageusement, lesdites gorges 56a et 56b peuvent être réalisées de manière inclinée par rapport aux plans des faces principales supérieure et inférieure 58a, 58b, l'inclinaison étant choisie en fonction de l'inclinaison à donner à l'embout 44 par rapport à la barre 34, et donc par rapport au moule conique 22.

D'une manière avantageuse, les faces principales 58a, 58b du corps du chariot de guidage 58 présentent des extrémités avant et arrière ayant une section en forme de T définissant des patins supérieurs avant 62a, 62b et arrière 64a, 64b et des patins inférieurs avant 66a, 66b et arrière 68a, 68b. La largeur des extrémités avant et arrière du corps du chariot de guidage 58 est supérieure à la largeur de l'ouverture centrale 52 de sorte que les patins supérieurs avant 62a, 62b et arrière 64a, 64b sont agencés pour coulisser sur la face principale supérieure 50a de la glissière 50 et les patins inférieurs avant 66a, 66b et arrière 68a, 68b sont agencés pour coulisser sur la face principale inférieure 50b de la glissière 50 lorsque le chariot de guidage 58 est monté sur la glissière 50. Ainsi, le chariot de guidage 58 est parfaitement guidé par la glissière 50 lorsqu'il se déplace le long des rebords de guidage 54a et 54b de ladite glissière 50.

Avantageusement, la glissière 50 présente à son extrémité supérieure un dégagement intérieur 70 avec des chicanes 72, ledit dégagement 70 étant plus large que l'ouverture centrale 52. Ce dégagement 70 permet de faciliter l'introduction et le retrait du chariot de guidage 58.

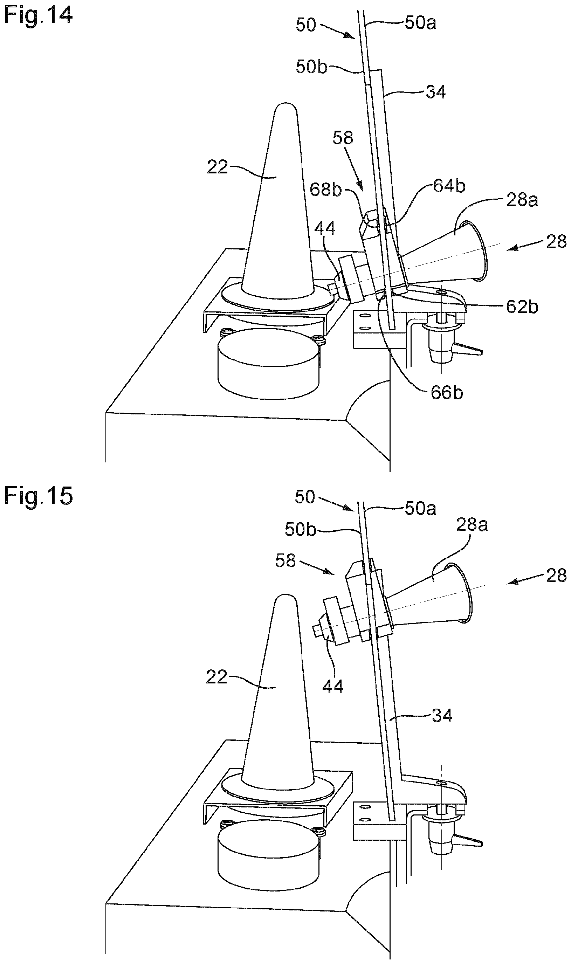

Lors de l'étape d) du procédé de l'invention, la douille 28a de l'outil de dépôt 28 dont le réservoir 42 est rempli de préparation destinée à composer la pâtisserie est vissée sur la face supérieure 58a du chariot de guidage 58. Puis le chariot de guidage 58 portant l'outil de dépôt 28 est introduit dans la glissière 50 par le dégagement 70 puis dans l'ouverture centrale 52 de sorte que les rebords de guidage 54a, 54b de la glissière 50 peuvent coulisser dans les gorges latérales 56a, 56b respectivement du chariot de guidage 58. Le chariot de guidage 58 avec l'outil de dépôt 28 est amené au fond de la glissière 50, en position initiale de dépôt, l'embout 44 étant positionné en direction du moule conique 22, comme le montre la figure 14. Puis, l'outil de dépôt 28 porté par le chariot de guidage 58 guidé dans la glissière 50 est déplacé en translation, de manière continue et régulière, le long du moule conique 22, depuis la base dudit moule conique 22 jusqu'à son sommet, en position finale de dépôt, comme le montre la figure 15. Le chariot de guidage 58 avec l'outil de dépôt 28 est retiré de la glissière 50 par le dégagement 70. Le procédé se poursuit comme décrit ci-dessus.

Selon une autre variante non représentée, les moyens de guidage 26 de l'outil de dépôt 28 peuvent être agencés pour aider ledit outil de dépôt 28 à se déplacer le long du moule conique 22 monté sur le support de cône 12 lorsque ledit support de cône 12 est entrainé en rotation par le plateau rotatif 4, la vitesse de déplacement de l'outil de dépôt 28 et la vitesse de rotation du support de cône 12 étant choisies de sorte que l'outil de dépôt 28 se déplace le long de différentes génératrices du moule conique 22 en suivant la directrice, afin de pouvoir déposer sur ledit moule conique 22 des cordons de la préparation destinée à composer la pâtisserie en formant des lignes contiguës et suivant les génératrices du cône, de manière à obtenir au moins un cône 32 constitué de lignes génératrices contiguës de ladite préparation formé autour du moule conique 22. De préférence, l'outil de dépôt 28 est agencé pour effectuer plusieurs déplacements alternatifs en translation le long du moule conique 22, de sorte que les lignes génératrices contiguës de préparation sont déposées sur le moule conique 22 en continu. Il est bien évident que l'outil de dépôt peut être agencé pour déposer un cordon de préparation uniquement dans une direction, le déplacement dans la direction contraire étant neutre.

La pâtisserie 48 peut être utilisée comme support comestible prêt à garnir pour réaliser des glaces ou différents plats dans lesquels le cône de préparation cuite est fourré de préparations salées ou sucrées.

Le procédé selon l'invention permet de réaliser de manière simple et rapide une pâtisserie sous la forme de cône à partir d'une préparation qui, lorsqu'elle est non cuite, présente certaines propriétés rhéologiques permettant notamment son extrusion au moyen de l'outil de dépôt, et qui, une fois cuite, présente une certaine rigidité empêchant toute mise en forme ultérieure. Le cône est réalisé en meringue, et est constitué de spires 30 continues et contiguës ou de lignes génératrices contiguës. Il présente de préférence une courbe directrice circulaire ou polygonale.

## Revendications

1. Appareil (1) de fabrication de pâtisserie (48) sous la forme de cône comprenant au moins un support de cône (12), au moins un moule de forme conique (22) agencé pour pouvoir être monté de manière amovible sur le support de cône (12), et des moyens de guidage (26) aptes à guider un outil de dépôt (28) d'une préparation destinée à composer la pâtisserie, lesdits moyens de guidage (26) et le support de cône (12) étant agencés pour que ledit outil de dépôt (28) et le moule conique (22) monté sur le support de cône (12) soient aptes à se déplacer l'un par rapport à l'autre afin de pouvoir déposer, sur ledit moule conique (22), de la préparation destinée à composer la pâtisserie, de manière à obtenir au moins un cône (32) de ladite préparation formé autour du moule conique (22), ledit appareil étant **caractérisé en ce qu'**il comprend un socle (2) portant au moins un plateau (4), **en ce que** le support de cône (12) est agencé pour pouvoir être monté de manière amovible sur ledit plateau (4) et **en ce que** le moule conique (22) est en silicone.

2. Appareil (1) selon la revendication 1, **caractérisé en ce que** le plateau (4) est rotatif, et **en ce que** les moyens de guidage (26) de l'outil de dépôt (28) sont agencés pour aider ledit outil de dépôt (28) à se déplacer le long du moule conique (22) monté sur le support de cône (12) lorsque ledit support de cône (12) est entrainé en rotation par le plateau rotatif (4), la vitesse de déplacement de l'outil de dépôt (28) et la vitesse de rotation du support de cône (12) étant choisies de sorte que l'outil de dépôt (28) est destiné à se déplacer le long d'une même génératrice du moule conique (22), afin de pouvoir déposer autour dudit moule conique (22) des spires (30) continues et contiguës de la préparation destinée à composer la pâtisserie, de manière à obtenir au moins un cône (32) constitué de spires (30) continues et contiguës de ladite préparation formé autour du moule conique (22).

3. Appareil (1) selon la revendication 1, **caractérisé en ce que** le plateau (4) est rotatif, et **en ce que** les moyens de guidage (26) de l'outil de dépôt (28) sont agencés pour aider ledit outil de dépôt (28) à se déplacer le long du moule conique (22) monté sur le support de cône (12) lorsque ledit support de cône (12) est entrainé en rotation par le plateau rotatif (4), la vitesse de déplacement de l'outil de dépôt (28) et la vitesse de rotation du support de cône (12) étant choisies de sorte que l'outil de dépôt (28) est destiné à se déplacer le long de différentes génératrices du moule conique (22) en suivant la directrice, afin de pouvoir déposer sur ledit moule conique (22) des lignes contiguës et suivant les génératrices de la préparation destinée à composer la pâtisserie, de manière à obtenir au moins un cône (32) constitué de lignes génératrices contiguës de ladite préparation formé autour du moule conique (22).

4. Appareil selon l'une des revendications précédentes, **caractérisé en ce que** les moyens de guidage (26) de l'outil de dépôt (28) de la préparation destinée à composer la pâtisserie sont agencés pour aider à positionner ledit outil de dépôt (28) parallèlement à une génératrice du moule conique (22) au moins lors du dépôt de la préparation destinée à composer la pâtisserie.

5. Appareil selon l'une des revendications précédentes, **caractérisé en ce que** les moyens de guidage (26) comprennent une barre (34) montée pivotante par rapport au socle (2).

6. Appareil selon la revendication 5, **caractérisé en ce que** la barre (34) présente au moins un rebord de guidage (34b) apte à recevoir au moins une gorge (46) prévue sur l'outil de dépôt (28) de la préparation destinée à composer la pâtisserie.

7. Appareil selon l'une des revendications 5 et 6, **caractérisé en ce que** la barre (34) est munie d'une glissière (50) présentant une ouverture longitudinale (52) délimitée par deux rebords de guidage longitudinaux (54a, 54b) en regard l'un de l'autre, chacun desdits rebords de guidage (54a, 54b) étant apte à recevoir une gorge latérale (56a, 56b) prévue sur un chariot de guidage (58) agencé pour porter l'outil de dépôt (28) de la préparation destinée à composer la pâtisserie.

8. Appareil selon la revendication 7, **caractérisé en ce que** le chariot de guidage (58) comprend un corps présentant entre ses faces principales longitudinales supérieure (58a) et inférieure (58b) un orifice traversant (60), la face principale supérieure (58a) étant destinée à recevoir l'outil de dépôt (28) de la préparation destinée à composer la pâtisserie, et la face principale inférieure (58b) étant destinée à recevoir un embout (44) présentant une ouverture de forme permettant de sortir un cordon de ladite préparation, ledit corps du chariot de guidage (58) présentant sur ses deux faces latérales (58c, 58d) lesdites gorges latérales (56a, 56b) dans lesquelles peuvent coulisser les rebords de guidage (54a, 54b) de la glissière (50).

9. Appareil selon la revendication 8, **caractérisé en ce que** les faces principales supérieure (58a) et inférieure (58b) du corps du chariot de guidage (58) présentent des extrémités avant et arrière ayant une section en forme de T définissant des patins supérieurs avant (62a, 62b) et arrière (64a, 64b) agencés pour coulisser sur la face supérieure (50a) de la glissière (50) et des patins inférieurs avant (66a, 66b) et arrière (68a, 68b) agencés pour coulisser sur la face inférieure (50b) de la glissière (50).

10. Appareil selon l'une des revendications précédentes, **caractérisé en ce que** le socle (2) comprend une première surface d'appui (2a) agencée pour être posée sur un bâti lorsque le support de cône (12) est mis en place sur le plateau rotatif (4) et une seconde surface d'appui (2b) inclinée par rapport à la première surface d'appui (2a) et agencée pour être posée sur ledit bâti au moins lorsque la préparation destinée à composer la pâtisserie doit être déposée sur le moule conique (22), l'angle (a) entre les première et seconde surfaces d'appui (2a, 2b) étant choisi de sorte que l'axe longitudinal du moule conique (22) n'est pas vertical au moins lorsque ladite préparation est déposée sur ledit moule conique (22).

11. Appareil selon l'une des revendications précédentes, **caractérisé en ce que** le plateau rotatif (4) présente des moyens de fixation et de centrage du support de cône (12).

12. Appareil selon l'une des revendications précédentes, **caractérisé en ce que** la préparation destinée à composer la pâtisserie est une préparation pour meringue.

13. Appareil selon l'une des revendications précédentes, **caractérisée en ce que** le cône est à directrice circulaire ou polygonale.

14. Equipement de fabrication de pâtisserie (48) sous la forme de cône à partir d'une préparation destinée à composer la pâtisserie comprenant un appareil (1) selon l'une des revendications 1 à 13, et un outil de dépôt (28) de ladite préparation destinée à composer la pâtisserie comprenant un réservoir (42) de ladite préparation, ledit outil de dépôt (28) étant agencé pour coopérer avec les moyens de guidage (26) de l'appareil (1) et le support de cône (12) de sorte que ledit outil de dépôt (28) et le moule conique (22) monté sur le support de cône (12) se déplacent l'un par rapport à l'autre afin de pouvoir déposer, sur ledit dudit moule conique (22), de la préparation destinée à composer la pâtisserie pour obtenir au moins un cône (32) de ladite préparation formé autour du moule conique (22).

15. Procédé de fabrication de pâtisserie (48) sous la forme de cône à partir d'une préparation destinée à composer la pâtisserie par mise en œuvre de l'appareil selon les revendications 1 à 13 ou de l'équipement selon la revendication 14, comprenant les étapes de :
a) mise en place du support de cône (12) sur le plateau (4)
b) positionnement des moyens de guidage (26) de l'outil de dépôt (28) de la préparation destinée à composer la pâtisserie de manière à pouvoir positionner ledit outil de dépôt (28) parallèlement à une génératrice du moule conique (22)
c) mise en place du moule conique (22) sur le support de cône (12)
d) déposition de la préparation destinée à composer la pâtisserie autour du moule conique (22) par déplacement l'un par rapport à l'autre dudit moule conique (22) monté sur le support de cône (12) et de l'outil de dépôt (28) guidé par les moyens de guidage (26) afin de déposer, sur ledit moule conique (22), de la préparation destinée à composer la pâtisserie pour obtenir au moins un cône (32) de ladite préparation formé autour du moule conique (22)
e) retrait du support de cône (12), portant le moule conique (22) recouvert de la préparation destinée à composer la pâtisserie, du plateau (4)
f) mise en place du support de cône (12) portant le moule conique (22) recouvert de la préparation destinée à composer la pâtisserie dans un four de cuisson
g) cuisson du cône (32) de préparation destinée à composer la pâtisserie
h) retrait du support de cône (12) portant le moule conique (22) recouvert de la préparation destinée à composer la pâtisserie cuite du four de cuisson,
i) séparation du moule conique (22) recouvert de la préparation destinée à composer la pâtisserie cuite du support de cône (12)
j) démoulage de la préparation destinée à composer la pâtisserie cuite du moule conique (22) pour obtenir une pâtisserie (48) sous la forme d'un cône.

16. Procédé selon la revendication 15, **caractérisé en ce que** le plateau (4) est rotatif, et **en ce que** la déposition de la préparation destinée à composer la pâtisserie autour du moule conique (22) est réalisée par rotation dudit moule conique (22) monté sur le support de cône (12) entrainé par le plateau rotatif (4) et déplacement en translation de l'outil de dépôt (28) guidé par les moyens de guidage (26) le long du moule conique (22), la vitesse de déplacement de l'outil de dépôt (28) et la vitesse de rotation du support de cône (12) étant choisies de sorte que l'outil de dépôt (28) se déplace le long d'une même génératrice du moule conique (22) afin de déposer autour dudit moule conique (22) des spires (30) continues et contiguës de la préparation destinée à composer la pâtisserie pour obtenir au moins un cône (32) constitué de spires (30) continues et contiguës de ladite préparation formé autour du moule conique (22).

17. Procédé selon la revendication 15, **caractérisé en ce que** le plateau (4) est
rotatif, et **en ce que** la déposition de la préparation destinée à composer la pâtisserie autour du moule conique (22) est réalisée par rotation dudit moule conique (22) monté sur le support de cône (12) entrainé par le plateau rotatif (4) et plusieurs déplacements en translation de l'outil de dépôt (28) guidé par les moyens de guidage (26) le long du moule conique (22), la vitesse de déplacement de l'outil de dépôt (28) et la vitesse de rotation du support de cône (12) étant choisies de sorte que l'outil de dépôt (28) se déplace le long de différentes génératrices du moule conique (22) en suivant la directrice, afin de déposer sur ledit moule conique (22) des lignes contiguës et suivant les génératrices de la préparation destinée à composer la pâtisserie pour obtenir au moins un cône (32) constitué de lignes génératrices contiguës de ladite préparation formé autour du moule conique (22).

18. Procédé selon l'une des revendications 15 à 17, comprenant en outre, avant
l'étape d), une étape de positionnement du socle (2) sur sa seconde surface d'appui (2b) pour l'incliner et positionner le support de cône (12) de sorte que l'axe longitudinal du moule conique (22) n'est pas vertical au moins lorsque la préparation destinée à composer la pâtisserie doit être déposée.

19. Procédé selon la revendication 18, comprenant en outre, après l'étape d) une étape de repositionnement du socle (2) sur sa première surface d'appui (2a) pour repositionner le support de cône (12) de sorte que l'axe longitudinal du moule conique (22) est sensiblement vertical.

20. Pâtisserie sous la forme d'un cône obtenue par le procédé selon l'une des revendications 15 à 19, et réalisée en meringue.

21. Pâtisserie selon la revendication 20, **caractérisée en ce que** le cône est à directrice circulaire ou polygonale.

22. Pâtisserie selon l'une des revendications 20 à 21, **caractérisée en ce que** le cône est constitué de spires (30) continues et contiguës de meringue.

23. Pâtisserie selon l'une des revendications 20 à 21, **caractérisée en ce que** le cône est constitué de lignes génératrices contiguës de meringue.

## Patentansprüche

1. Gerät (1) zur Herstellung eines Konditoreiprodukts (48) in Form eines Konus, umfassend mindestens einen Konusträger (12), mindestens eine konische Form (22), die dazu vorgesehen ist, abnehmbar auf dem Konusträger (12) montiert werden zu können, und Führungsmittel (26), die geeignet sind, ein Werkzeug (28) zum Auftragen einer Zubereitung, die dazu bestimmt ist, das Konditoreiprodukt zu bilden, zu führen, wobei die Führungsmittel (26) und der Konusträger (12) derart ausgeführt sind, dass das Auftragwerkzeug (28) und die konische Form (22), die auf dem Konusträger (12) montiert ist, geeignet sind, sich in Bezug zueinander zu verlagern, um auf die konische Form (22) Zubereitung, die dazu bestimmt ist, das Konditoreiprodukt zu bilden, aufbringen zu können, um mindestens einen Konus (32) aus der um die konische Form (22) geformten Zubereitung zu erhalten, wobei das Gerät **dadurch gekennzeichnet ist, dass** es einen Sockel (2) umfasst, der mindestens eine Platte (4) trägt, dass der Konusträger (12) dazu vorgesehen ist, abnehmbar auf der Platte (4) montiert werden zu können, und dass die konische Form (22) aus Silikon ist.

2. Gerät (1) nach Anspruch 1, **dadurch gekennzeichnet, dass** die Platte (4) drehend ist, und dass die Führungsmittel (26) des Auftragwerkzeugs (28) dazu vorgesehen sind, dem Auftragwerkzeug (28) zu helfen, sich entlang der auf dem Konusträger (12) montierten konischen Form (22) zu verlagern, wenn der Konusträger (12) in Drehung von der drehenden Platte (4) angetrieben wird, wobei die Verlagerungsgeschwindigkeit des Auftragwerkzeugs (28) und die Drehgeschwindigkeit des Konusträgers (12) derart gewählt sind, dass das Auftragwerkzeug (28) dazu bestimmt ist, sich entlang einer selben Mantellinie der konischen Form (22) zu verlagern, um um die konische Form (22) herum durchgehende und aneinandergrenzende Windungen (30) der Zubereitung, die dazu bestimmt ist, das Konditoreiprodukt zu bilden, auftragen zu können, um mindestens einen Konus (32) zu erhalten, der von durchgehenden und aneinandergrenzenden Windungen (30) der um die konische Form (22) geformten Zubereitung zu erhalten.

3. Gerät (1) nach Anspruch 1, **dadurch gekennzeichnet, dass** die Platte (4) drehend ist, und dass die Führungsmittel (26) des Auftragwerkzeugs (28) dazu vorgesehen sind, dem Auftragwerkzeug (28) zu helfen, sich entlang der auf dem Konusträger (12) montierten konischen Form (22) zu verlagern, wenn der Konusträger (12) von der drehenden Platte (4) in Drehung angetrieben wird, wobei die Verlagerungsgeschwindigkeit des Auftragwerkzeugs (28) und die Drehgeschwindigkeit des Konusträgers (12) derart gewählt sind, dass das Auftragwerkzeug (28) dazu bestimmt ist, sich entlang verschiedener Mantellinien der konischen Form (22) zu verlagern, wobei es der Leitlinie folgt, um auf die konische Form (22) aneinandergrenzende und den Mantellinien folgende Linien der Zubereitung, die dazu bestimmt ist, das Konditoreiprodukt zu bilden, auftragen zu können, um mindestens einen Konus (32) zu erhalten, der von aneinandergrenzenden Mantellinien der um die konische Form (22) geformten Zubereitung gebildet ist.

4. Gerät nach einem der vorhergehenden Ansprüche, **dadurch gekennzeichnet, dass** die Führungsmittel (26) des Werkzeugs (28) zum Auftragen der Zubereitung, die dazu bestimmt ist, das Konditoreiprodukt zu bilden, dazu vorgesehen sind zu helfen, das Auftragwerkzeug (28) parallel zu einer Mantellinie der konischen Form (22) zumindest beim Auftragen der Zubereitung, die dazu bestimmt ist, das Konditoreiprodukt zu bilden, zu positionieren.

5. Gerät nach einem der vorhergehenden Ansprüche, **dadurch gekennzeichnet, dass** die Führungsmittel (26) einen Balken (34) umfassen, der in Bezug zum Sockel (2) schwenkbar montiert ist.

6. Gerät nach Anspruch 5, **dadurch gekennzeichnet, dass** der Balken (34) mindestens einen Führungsrand (34b) aufweist, der geeignet ist, mindestens eine Rille (46) aufzunehmen, die auf dem Werkzeug (28) zum Auftragen der Zubereitung, die dazu bestimmt ist, das Konditoreiprodukt zu bilden, vorgesehen ist.

7. Gerät nach einem der Ansprüche 5 und 6, **dadurch gekennzeichnet, dass** der Balken (34) mit einer Gleitschiene (50) versehen ist, die eine Längsöffnung (52) aufweist, die von zwei Längsführungsrändern (54a, 54b), die einander gegenüberliegen, begrenzt ist, wobei jeder dieser Führungsränder (54a, 54b) geeignet ist, eine seitliche Rille (56a, 56b) aufzunehmen, die auf einem Führungsschlitten (58) vorgesehen ist, der ausgeführt ist, um das Werkzeug (28) zum Auftragen der Zubereitung, die dazu bestimmt ist, das Konditoreiprodukt zu bilden, zu tragen.

8. Gerät nach Anspruch 7, **dadurch gekennzeichnet, dass** der Führungsschlitten (58) einen Körper umfasst, der zwischen seinen oberen (58a) und unteren (58b) Hauptlängsseiten eine durchgehende Öffnung (60) aufweist, wobei die obere Hauptseite (58a) dazu bestimmt ist, das Werkzeug (28) zum Auftragen der Zubereitung, die dazu bestimmt ist, das Konditoreiprodukt zu bilden, aufzunehmen, und wobei die untere Hauptseite (58b) dazu bestimmt ist, einen Aufsatz (44) aufzunehmen, der eine Öffnung mit einer Form aufwiest, die es ermöglicht, eine Schnur der Zubereitung auszugeben, wobei der Körper des Führungsschlittens (58) auf seinen zwei Seitenflächen (58c, 58d) die seitlichen Rillen (56a, 56b) aufweist, in denen die Führungsränder (54a, 54b) der Gleitschiene (50) gleiten können.

9. Gerät nach Anspruch 8, **dadurch gekennzeichnet, dass** die oberen (58a) und unteren (58b) Hauptseiten des Körpers des Führungsschlittens (58) vordere und hintere Enden mit einem T-förmigen Querschnitt aufweisen, die vordere (62a, 62b) und hintere (64a, 64b) obere Kufen, die dazu vorgesehen sind, auf der Oberseite (50a) der Gleitschiene (50) zu gleiten, und vordere (66a, 66b) und hintere (68a, 68b) untere Kufen definieren, die dazu vorgesehen sind, auf der Unterseite (50b) der Gleitschiene (50) zu gleiten.

10. Gerät nach einem der vorhergehenden Ansprüche, **dadurch gekennzeichnet, dass** der Sockel (2) eine erste Auflagefläche (2a), die dazu vorgesehen ist, auf ein Gestell gestellt zu werden, wenn der Konusträger (12) auf der drehenden Platte (4) angeordnet wird, und eine zweite Auflagefläche (2b) umfasst, die in Bezug zur ersten Auflagefläche (2a) geneigt und dazu vorgesehen ist, auf das Gestell zumindest dann gestellt zu werden, wenn die Zubereitung, die dazu bestimmt ist, das Konditoreiprodukt zu bilden, auf die konische Form (22) aufgetragen werden soll, wobei der Winkel (α) zwischen den ersten und zweiten Auflageflächen (2a, 2b) derart gewählt ist, dass die Längsachse der konischen Form (22) zumindest dann nicht vertikal ist, wenn die Zubereitung auf die konische Form (22) aufgetragen wird.

11. Gerät nach einem der vorhergehenden Ansprüche, **dadurch gekennzeichnet, dass** die drehende Platte (4) Mittel zur Befestigung und Zentrierung des Konusträgers (12) aufweist.

12. Gerät nach einem der vorhergehenden Ansprüche, **dadurch gekennzeichnet, dass** die Zubereitung, die dazu bestimmt ist, das Konditoreiprodukt zu bilden, eine Meringue-Zubereitung ist.

13. Gerät nach einem der vorhergehenden Ansprüche, **dadurch gekennzeichnet, dass** der Konus eine kreisförmige oder polygonale Mantellinie aufweist.

14. Ausrüstung zur Herstellung eines Konditoreiprodukts (48) in Form eines Konus aus einer Zubereitung, die dazu bestimmt ist, das Konditoreiprodukt zu bilden, umfassend ein Gerät (1) nach einem der Ansprüche 1 bis 13 und ein Werkzeug (28) zum Auftragen der Zubereitung, die dazu bestimmt ist, das Konditoreiprodukt zu bilden, umfassend einen Behälter (42) der Zubereitung, wobei das Auftragwerkzeug (28) dazu vorgesehen ist, mit den Führungsmitteln (26) des Geräts (1) und dem Konusträger (12) zusammenzuwirken, so dass sich das Auftragwerkzeug (28) und die auf dem Konusträger (12) montierte konische Form (22) in Bezug zueinander verlagern, um auf die konische Form (22) Zubereitung, die dazu bestimmt ist, das Konditoreiprodukt zu bilden, auftragen zu können, um mindestens einen Konus (32) der um die konische Form (22) geformten Zubereitung zu erhalten.

15. Verfahren zur Herstellung eines Konditoreiprodukts (48) in Form eines Konus aus einer Zubereitung, die dazu bestimmt ist, das Konditoreiprodukt zu bilden, durch Einsatz des Geräts nach den Ansprüchen 1 bis 13 oder der Ausrüstung nach Anspruch 14, umfassend die folgenden Schritte:
a) Anordnen des Konusträgers (12) auf der Platte (4)
b) Positionieren der Führungsmittel (26) des Werkzeugs (28) zum Auftragen der Zubereitung, die dazu bestimmt ist, das Konditoreiprodukt zu bilden, derart, dass das Auftragwerkzeug (28) parallel zu einer Mantellinie der konischen Form (22) positioniert werden kann
c) Anordnen der konischen Form (22) auf dem Konusträger (12)
d) Auftragen der Zubereitung, die dazu bestimmt ist, das Konditoreiprodukt zu bilden, um die konische Form (22) durch Verlagern der auf dem Konusträger (12) montierten konischen Form (22) und des von den Führungsmitteln (26) geführten Auftragwerkzeugs (28) in Bezug zueinander, um auf die konische Form (22) Zubereitung, die dazu bestimmt ist, das Konditoreiprodukt zu bilden, aufzutragen, um mindestens einen Konus (32) der um die konische Form (22) gebildeten Zubereitung zu erhalten
e) Entfernen des Konusträgers (12), der die Form (22) trägt, die mit der Zubereitung, die dazu bestimmt ist, das Konditoreiprodukt zu bilden, überzogen ist, von der Platte (4)
f) Anordnen des Konusträgers (12), der die Form (22) trägt, die mit der Zubereitung, die dazu bestimmt ist, das Konditoreiprodukt zu bilden, überzogen ist, in einem Backofen
g) Backen des Konus (32) der Zubereitung, die dazu bestimmt ist, das Konditoreiprodukt zu bilden
h) Entfernen des Konusträgers (12), der die Form (22) trägt, die mit der Zubereitung, die dazu bestimmt ist, das Konditoreiprodukt zu bilden, überzogen ist, aus dem Backofen
i) Trennen der konischen Form (22), die mit der Zubereitung, die dazu bestimmt ist, das gebackene Konditoreiprodukt zu bilden, von dem Konusträger (12)
j) Ausformen der Zubereitung, die dazu bestimmt ist, das gebackene Konditoreiprodukt zu bilden, aus der konischen Form (22), um ein Konditoreiprodukt (48) in Form eines Konus zu erhalten.

16. Verfahren nach Anspruch 15, **dadurch gekennzeichnet, dass** die Platte (4) drehend ist, und dass das Auftragen der Zubereitung, die dazu bestimmt ist, das Konditoreiprodukt zu bilden, um die konische Form (22) durch Drehen der konischen Form (22), die auf dem Konusträger (12) montiert ist, der von der drehenden Platte (4) angetrieben wird, und Verlagern des von den Führungsmitteln (26) geführten Auftragwerkzeugs (28) in Translation entlang der konischen Form (22) erfolgt, wobei die Verlagerungsgeschwindigkeit des Auftragwerkzeugs (28) und die Drehgeschwindigkeit des Konusträgers (12) derart gewählt sind, dass sich das Auftragwerkzeug (28) entlang einer selben Mantellinie der konischen Form (22) verlagert, um um die konische Form (22) durchgehende und aneinandergrenzende Windungen (30) der Zubereitung, die dazu bestimmt ist, das Konditoreiprodukt zu bilden, aufzutragen, um mindestens einen Konus (32) zu erhalten, der von durchgehenden und aneinandergrenzenden Windungen (30) der um die konische Form (22) geformten Zubereitung gebildet ist.

17. Verfahren nach Anspruch 15, **dadurch gekennzeichnet, dass** die Platte (4) drehend ist, und dass das Auftragen der Zubereitung, die dazu bestimmt ist, das Konditoreiprodukt zu bilden, um die konische Form (22) durch Drehen der konischen Form (22), die auf dem Konusträger (12) montiert ist, der von der drehenden Platte (4) angetrieben wird, und mehrere Verlagerungen des von den Führungsmitteln (26) geführten Auftragwerkzeugs (28) entlang der konischen Form (22) erfolgt, wobei die Verlagerungsgeschwindigkeit des Auftragwerkzeugs (28) und die Drehgeschwindigkeit des Konusträgers (12) derart gewählt ist, dass sich das Auftragwerkzeug (28) entlang verschiedener Mantellinien der konischen Form (22) verlagert, wobei es der Leitlinie folgt, um auf die konische Form (22) aneinandergrenzende und den Mantellinien folgende Linien der Zubereitung, die dazu bestimmt ist, das Konditoreiprodukt zu bilden, aufzutragen, um mindestens einen Konus (32) zu erhalten, der von aneinandergrenzenden Mantellinien der um die konische Form (22) gebildeten Zubereitung gebildet ist.

18. Verfahren nach einem der Ansprüche 15 bis 17, ferner umfassend vor dem Schritt d) einen Schritt der Positionierung des Sockels (2) auf seiner zweiten Auflagefläche (2b), um ihn zu neigen und den Konusträger (12) derart zu positionieren, dass die Längsachse der konischen Form (22) zumindest dann nicht vertikal ist, wenn die Zubereitung, die dazu bestimmt ist, das Konditoreiprodukt zu bilden, aufgetragen werden soll.

19. Verfahren nach Anspruch 18, ferner umfassend nach dem Schritt d) einen Schritt der Neupositionierung des Sockels (2) auf seiner ersten Auflagefläche (2a), um den Konusträger (12) derart neu zu positionieren, dass die Längsachse der konischen Form (22) im Wesentlichen vertikal ist.

20. Konditoreiprodukt in Form eines Konus, das durch das Verfahren nach einem der Ansprüche 15 bis 19 hergestellt und als Meringue ausgeführt ist.

21. Konditoreiprodukt nach Anspruch 20, **dadurch gekennzeichnet, dass** der Konus eine kreisförmige oder polygonale Mantellinie aufweist.

22. Konditoreiprodukt nach einem der Ansprüche 20 bis 21, **dadurch gekennzeichnet, dass** der Konus von durchgehenden und aneinandergrenzenden Meringue-Windungen (30) gebildet ist.

23. Konditoreiprodukt nach einem der Ansprüche 20 bis 21, **dadurch gekennzeichnet, dass** der Konus von aneinandergrenzenden Meringue-Mantellinien gebildet ist.

## Claims

1. Apparatus (1) for making a pastry (48) in the shape of a cone comprising at least one cone holder (12), at least one conical mould (22) arranged to be able to be removably mounted on the cone holder (12), and guide means (26) able to guide a tool (28) for depositing a preparation intended to become the pastry, said guide means (26) and the cone holder (12) being arranged such that said depositing tool (28) and the conical mould (22) mounted on the cone holder (12) are able to move with respect to each other so as to be able to deposit, on said conical mould (22), the preparation intended to become the pastry so as to obtain at least one cone (32) of said preparation formed around the conical mould (22), said apparatus being **characterized in that** it comprises a base (2) carrying at least one plate (4), **in that** the cone holder (12) is arranged to be able to be removably mounted on said plate (4) and **in that** the conical mould (22) is made from silicone.

2. Apparatus (1) as claimed in claim 1, **characterised in that** the plate (4) is a rotating plate, and **in that** the means (26) for guiding the depositing tool (28) are arranged to assist said depositing tool (28) in moving along the conical mould (22) mounted on the cone holder (12) when said cone holder (12) is rotationally driven by the rotating plate (4), the moving speed of the depositing tool (28) and the rotational speed of the cone holder (12) being selected such that the depositing tool (28) is intended to move along a single generatrix of the conical mould (22) so as to be able to deposit, around said conical mould (22), continuous and contiguous turns (30) of the preparation intended to become the pastry so as to obtain at least one cone (32) formed of continuous and contiguous turns (30) of said preparation formed around the conical mould (22).

3. Apparatus (1) as claimed in claim 1, **characterised in that** the plate (4) is a rotating plate, and **in that** the means (26) for guiding the depositing tool (28) are arranged to assist said depositing tool (28) in moving along the conical mould (22) mounted on the cone holder (12) when said cone holder (12) is rotationally driven by the rotating plate (4), the moving speed of the depositing tool (28) and the rotational speed of the cone holder (12) being selected such that the depositing tool (28) is intended to move along different generatrixes of the conical mould (22) following the directrix, so as to be able to deposit, on said conical mould (22), contiguous lines following the generatrixes of the preparation intended to become the pastry so as to obtain at least one cone (32) formed of contiguous generatrix lines of said preparation formed around the conical mould (22).

4. Apparatus as claimed in any one of the preceding claims, **characterised in that** the means (26) for guiding the tool (28) for depositing the preparation intended to become the pastry are arranged to assist the positioning of said depositing tool (28) in parallel with a generatrix of the conical mould (22) at least during the depositing of the preparation intended to become the pastry.

5. Apparatus as claimed in any one of the preceding claims, **characterised in that** the guide means (26) comprise a bar (34) mounted so as to be pivotable with respect to the base (2).

6. Apparatus as claimed in claim 5, **characterised in that** the bar (34) has at least one guide edge (34b) able to receive at least one groove (46) provided on the tool (28) for depositing the preparation intended to become the pastry.

7. Apparatus as claimed in any one of claims 5 and 6, **characterised in that** the bar (34) is provided with a runner (50) having a longitudinal opening (52) delimited by two mutually facing longitudinal guide edges (54a, 54b), each of said guide edges (54a, 54b) being able to receive a lateral groove (56a, 56b) provided on a guide carriage (58) arranged to carry the tool (28) for depositing the preparation intended to become the pastry.

8. Apparatus as claimed in claim 7, **characterised in that** the guide carriage (58) comprises a body having, between its longitudinal main upper (58a) and lower (58b) faces, a through-going orifice (60), the main upper face (58a) being intended to receive the tool (28) for depositing the preparation intended to become the pastry, and the main lower face (58b) being intended to receive an end fitting (44) having an opening with a shape allowing a strand of said preparation to be delivered therefrom, said body of the guide carriage (58) having, on its two side faces (58c, 58d), said side grooves (56a, 56b), in which the guide edges (54a, 54b) of the runner (50) can slide.

9. Apparatus as claimed in claim 8, **characterised in that** the main upper (58a) and lower (58b) faces of the body of the guide carriage (58) have front and rear ends having a T-shaped cross-section defining front (62a, 62b) and rear (64a, 64b) upper glides arranged to slide on the upper face (50a) of the runner (50) and front (66a, 66b) and rear (68a, 68b) lower glides arranged to slide on the lower face (50b) of the runner (50).

10. Apparatus as claimed in any one of the preceding claims, **characterised in that** the base (2) comprises a first support surface (2a) arranged to be placed on a frame when the cone holder (12) is placed on the rotating plate (4) and a second support surface (2b) which is inclined with respect to the first support surface (2a) and is arranged to be placed on said frame at least when the preparation intended to become the pastry is to be deposited on the conical mould (22), the angle (a) between the first and second support surfaces (2a, 2b) being selected such that the longitudinal axis of the conical mould (22) is not vertical at least when said preparation is deposited on said conical mould (22).

11. Apparatus as claimed in any one of the preceding claims, **characterised in that** the rotating plate (4) has means for fixing and centring the cone holder (12).

12. Apparatus as claimed in any one of the preceding claims, **characterised in that** the preparation intended to become the pastry is a meringue preparation.

13. Apparatus as claimed in any one of the preceding claims, **characterised in that** the cone has a circular or polygonal directrix.

14. Equipment for making a pastry (48) in the shape of a cone from a preparation intended to become the pastry, comprising an apparatus (1) as claimed in any one of claims 1 to 13, and a tool (28) for depositing said preparation intended to become the pastry comprising a reservoir (42) for said preparation, said depositing tool (28) being arranged to cooperate with the guide means (26) of the apparatus (1) and the cone holder (12) such that said depositing tool (28) and the conical mould (22) mounted on the cone holder (12) move with respect to each other so as to be able to deposit, on said conical mould (22), the preparation intended to become the pastry to obtain at least one cone (32) of said preparation formed around the conical mould (22).

15. Method for making a pastry (48) in the shape of a cone from a preparation intended to become the pastry by using the apparatus as claimed in any one of claims 1 to 13 or the equipment as claimed in claim 14, comprising the steps of:
a) placing the cone holder (12) on the plate (4)
b) positioning means (26) for guiding the tool (28) for depositing the preparation intended to become the pastry so as to be able to position said depositing tool (28) in parallel with a generatrix of the conical mould (22)
c) placing the conical mould (22) on the cone holder (12)
d) depositing the preparation intended to become the pastry around the conical mould (22) by moving said conical mould (22) mounted on the cone holder (12) and the depositing tool (28) guided by the guide means (26) with respect to each other so as to deposit, on said conical mould (22), the preparation intended to become the pastry to obtain at least one cone (32) of said preparation formed around the conical mould (22)
e) removing the cone holder (12), carrying the conical mould (22) covered by the preparation intended to become the pastry, from the plate (4)
f) placing the cone holder (12), carrying the conical mould (22) covered by the preparation intended to become the pastry, in a baking oven
g) baking the cone (32) of preparation intended to become the pastry
h) removing the cone holder (12), carrying the conical mould (22) covered by the baked preparation intended to become the pastry from the baking oven
i) separating the conical mould (22) covered by the baked preparation intended to become the pastry from the cone holder (12)
j) removing the baked preparation intended to become the pastry from the conical mould (22) to obtain a pastry (48) in the shape of a cone.

16. Method as claimed in claim 15, **characterised in that** the plate (4) is a rotating plate, and **in that** the preparation intended to become the pastry is deposited around the conical mould (22) by rotating said conical mould (22) mounted on the cone holder (12) driven by the rotating plate (4) and by moving, in a translational manner, the depositing tool (28) guided by the guide means (26) along the conical mould (22), the moving speed of the depositing tool (28) and the rotational speed of the cone holder (12) being selected such that the depositing tool (28) moves along a single generatrix of the conical mould (22) so as to deposit, around said conical mould (22), continuous and contiguous turns (30) of the preparation intended to become the pastry to obtain at least one cone (32) formed of continuous and contiguous turns (30) of said preparation formed around the conical mould (22).

17. Method as claimed in claim 15, **characterised in that** the plate (4) is a rotating plate, and **in that** the preparation intended to become the pastry is deposited around the conical mould (22) by rotating said conical mould (22) mounted on the cone holder (12) driven by the rotating plate (4) and by moving, multiple times in a translational manner, the depositing tool (28) guided by the guide means (26) along the conical mould (22), the moving speed of the depositing tool (28) and the rotational speed of the cone holder (12) being selected such that the depositing tool (28) moves along different generatrixes of the conical mould (22) following the directrix, so as to deposit, on said conical mould (22), contiguous lines following the generatrixes of the preparation intended to become the pastry to obtain at least one cone (32) formed of contiguous generatrix lines of said preparation formed around the conical mould (22).

18. Method as claimed in any one of claims 15 to 17, further comprising, prior to step d), a step of positioning the base (2) on its second support surface (2b) to incline it and position the cone holder (12) such that the longitudinal axis of the conical mould (22) is not vertical at least when the preparation intended to become the pastry is to be deposited.

19. Method as claimed in claim 18, further comprising, after step d), a step of repositioning the base (2) on its first support surface (2a) to reposition the cone holder (12) such that the longitudinal axis of the conical mould (22) is substantially vertical.

20. A pastry in the shape of a cone obtained by the method as claimed in any one of claims 15 to 19, and made of meringue.

21. A pastry as claimed in claim 20, **characterised in that** the cone has a circular or polygonal directrix.

22. A pastry as claimed in any one of claims 20 to 21, **characterised in that** the cone is formed of continuous and contiguous turns (30) of meringue.

23. A pastry as claimed in any one of claims 20 to 21, **characterised in that** the cone is formed of contiguous generatrix lines of meringue.
